# EUROPEAN PATENT APPLICATION

(11) **EP 1 645 961 A1**
(43) Date of publication of application: **12.04.2006**
(21) Application number: 03741333.3
(22) Date of filing: 10.07.2003
(51) Int. Cl.: G06F 12/00, G06F 17/21

(54) **STRUCTURED DOCUMENT PROCESSING METHOD, DEVICE, AND STORAGE MEDIUM**

(71) Applicant: FUJITSU LIMITED, Kawasaki-shi, Kanagawa 211-8588 (JP)
(72) Inventor: Itani, Noriko, c/o Fujitsu Limited, Kawasaki-shi, Kanagawa 211-8588 (JP)
(74) Representative: Körfer, Thomas
(86) International application number: PCT/JP2003/008798
(87) International publication number: WO 2005/006192

(57) **Abstract**

A structured document processing method includes a structured document holding step holding a structured document that includes tags, in a text form, in a memory means, a document information holding step holding document structure information of the structured document and positions of each of the tags of the structured document in a related manner, in the memory means, and a processing step acquiring information related to elements by tracing a tree structure of the structured document according to the document structure information, and acquiring a portion of the structured document based on the information that is acquired.

## Description

### TECHNICAL FIELD

The present invention generally relates to structured document processing methods and apparatuses and storage media, and more particularly to a structured document processing method and a structured document processing apparatus for processing a structured document such as an extensible Markup Language (XML) and a Standard Generated Mark-up Language (SGML), and to a computer-readable storage medium which stores a computer program for causing a computer to process a structured document by such a structured document processing method.

Recently, a plurality of systems, businesses, individuals and the like are connected via the internet, and data exchange services are made over a wide range, such as EDI services, EC services, portable telephone services, services for digital televisions and Web services.

In order to cope with such data exchange services, there is a move to unify the data format that is treated in computers. In other words, this move is to enable the data format that differs depending on the computer or application to be also usable in a different computer or application. The standard for unifying the data format has been formally recommended by the W3C in February 1998 as the WML. The XML standard is a sub set of the SGML which is a similar standard. In addition, the standard for the interface which treats an object in a memory to which the XML document is developed has been recommended by the W3C in October 1998 as the Document Object Model (DOM).

### BACKGROUND ART

In the following description, a character string sandwiched between "<" and ">" is referred to as a tag, "<character string>" is referred to as a start tag, "</character string>" is referred to as an end tag, a character string sandwiched between the start tag and the end tag is referred to as an element, a name of the element described between the tags is referred to as an element name, and added information with respect to the element is referred to as an attribute.

The structured document describes the data structure in a form which embeds the tap within the document itself. By employing the form in which the data structure is embedded in the document as the tag, it is possible to increase the flexibility and the extensibility of the data structure. In addition, by describing the tag by a text having a meaning or significance, the data that was treated in an independent system can also be treated with ease in another system.

DOM processors are popularly used as XML processors that acquire contents of the XML document, such as the element name, the element and the attribute, to a user application, and modifies, adds or deletes the contents of the XML document.

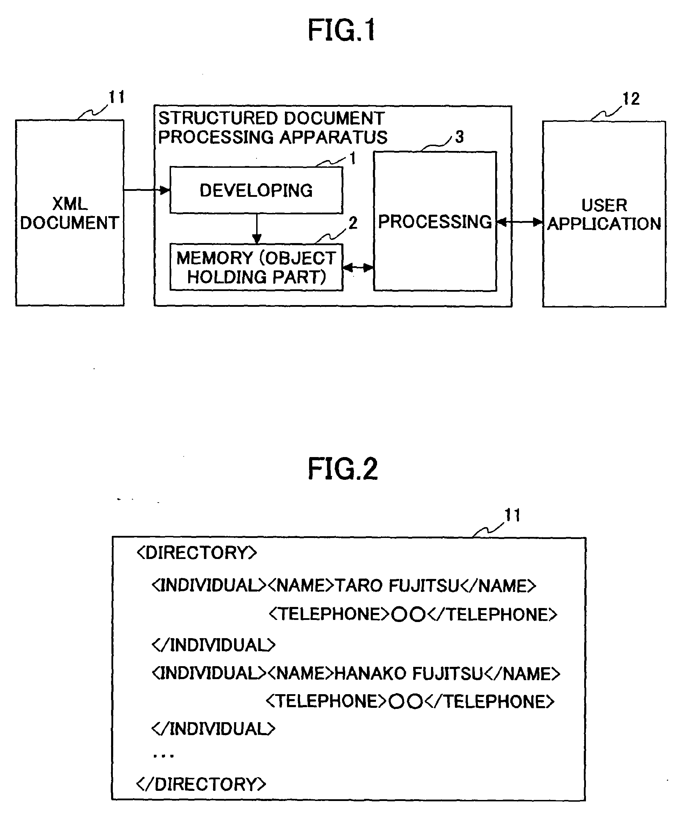

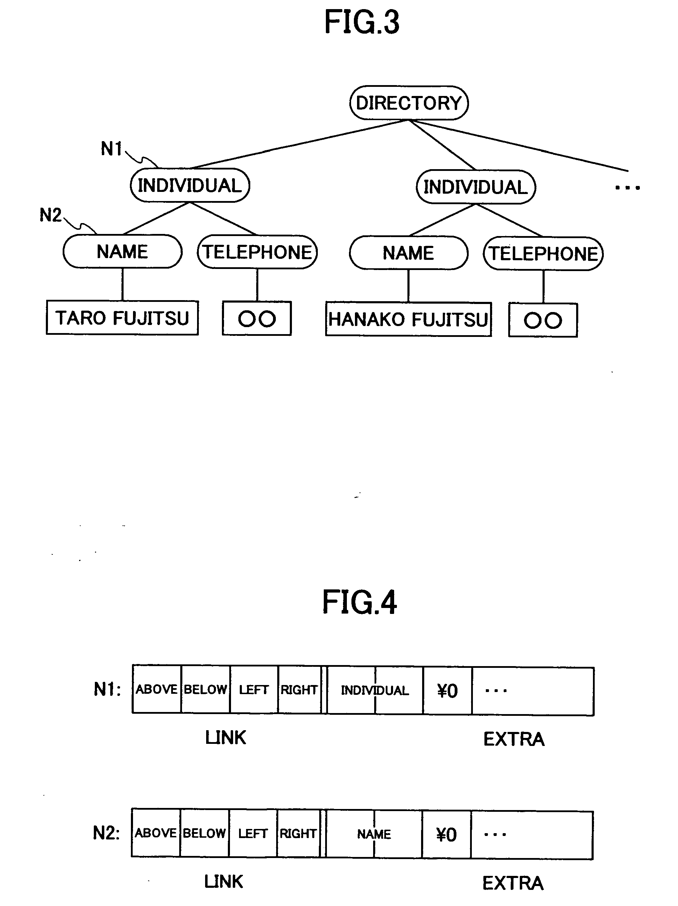

FIG. 1 is a functional block diagram showing an example of a conventional structured document processing apparatus (DOM processor). The functions of the functional blocks shown in FIG. 1 are realized by a known basic structure including a memory and a processor such as a CPU. The structured document processing apparatus includes a developing part 1, a memory 2 and a processing part 3. The functions of the developing part 1 and the processing part 3 are realized by the CPU. As shown in FIG. 1, when carrying out an XML document process in the conventional structured document processing apparatus, the structure of an XML document 11, which is a structured document, is analyzed in the developing part 1, and is developed in the memory 2 which forms an object holding part. FIG. 2 is a diagram showing an example of the structured document (XML document) 11, and FIG. 3 is a diagram for explaining the developing of the structured document (XML document) 11 shown in FIG. 2.

The XML document 11 is a serial text as shown in FIG. 2. The XML document 11 is separated for each element in the developing part 1, and is developed as shown in FIG. 3 according to the data structure described by the tags and stored in the memory 2. FIG. 3 shows the developed XML document 11 as a tree structure, but the information that is actually stored in the memory 2 includes link information, tag information, extra (surplus) information and the like as shown in FIG. 4 for each element (node). FIG. 4 is a diagram for explaining the information that is developed and stored in the memory 2 for elements N1 and N2 shown in FIG. 3. The link information includes elements located above and below and to the right and left of the element. The tag information includes tag names (element names) of the "individual", "name" and the like. In order to carry out a high-speed processing, the tag information is allocated with a fixed length to a region in most cases, and a region that is surplus becomes an extra region. In addition, the extra information includes information related to the tag information, attribute and the like.

By developing and storing the XML document 11 into the memory 2, it becomes possible to easily trace the tree structure of the developed XML document 11 up and down and to the right and left, depending on a processing request from a user application 12. However, since the contents of each individual element are divided one by one and stored in an array of the memory 2, there are problems in that the load on the developing part 1, that is, the CPU which carries out the developing, is large, and that the required storage capacity of the memory 2 becomes large.

In order to suppress the increase of the required storage capacity of the memory 2, it is conceivable to replace the element name by an internal ID and to treat the internal ID, but the load on the CPU which carries out the developing is still high in this conceivable case. In addition, in order to cope with a high-speed access, an array having a fixed size is employed in most cases to store the contents into the memory 2, but the length of the contents is not fixed, and it is necessary to determine the size of the array depending on the maximum length of the contents. Consequently, a vacancy is generated in the array, and the required storage capacity of the memory 2 becomes large.

Therefore, as the structured document 11 becomes large, the process of developing the structured document 11 occupies a large portion of the processes to be carried out by the CPU, and the processing speed of the CPU deteriorates. In addition, the information (object) that is developed and stored in the memory 2 requires a storage capacity that is approximately 5 to 10 times the amount of information of the original structured document 11. Hence, it is difficult for the conventional structured document processing apparatus to process a large structured document 11 amounting to several tens of MB or greater, for example.

Moreover, because each element of the structured document 11 is divided and stored in the individual array, it takes time to carry out not only the process of developing the structured document 11 but also to carry out the process of reconverting the developed structured document back to the original structured document 11, and there was a problem in that the load on the CPU is large also from this point of view.

The applicant is aware of the following prior art.
Japanese Laid-Open Patent Application No.2000-207409
Japanese Laid-Open Patent Application No.2001-331490

### DISCLOSURE OF THE INVENTION

Accordingly, it is a general object of the present invention to provide a novel and useful structured document processing method and apparatus and computer-readable storage medium, in which the problems described above are suppressed.

Another and more specific object of the present invention is to provide a structured document processing method, a structured document processing apparatus and computer-readable storage medium, which can reduce a load on a processor that processes the structured document, and reduce a storage capacity that is required to process the structured document.

Still another object of the present invention is to provide a structured document processing method comprising a structured document holding step holding a structured document that includes tags, in a text form, in a memory means; a document information holding step holding document structure information of the structured document and positions of each of the tags of the structured document in a related manner, in the memory means; and a processing step acquiring information related to elements by tracing a tree structure of the structured document according to the document structure information, and acquiring a portion of the structured document based on the information that is acquired. According to the structured document processing method of the present invention, it is possible to reduce a load on a processor that processes the structured document, and to reduce a storage capacity that is required to process the structured document.

A further object of the present invention is to provide a structured document processing apparatus comprising a structured document holding part configured to hold a structured document that includes tags, in a text form; a document information holding part configured to hold document structure information of the structured document and positions of each of the tags of the structured document in a related manner; and a processing part configured to acquire information related to elements by tracing a tree structure of the structured document according to the document structure information, and to acquire a portion of the structured document based on the information that is acquired. According to the structured document processing apparatus of the present invention, it is possible to reduce a load on a processor that processes the structured document, and to reduce a storage capacity that is required to process the structured document.

Another object of the present invention is to provide a computer-readable storage medium which stores a computer program for causing a computer to carry out a structured document processing, the program comprising a structured document holding procedure causing the computer to hold a structured document that includes tags, in a text form; a document information holding procedure causing the computer to hold document structure information of the structured document and positions of each of the tags of the structured document in a related manner; and a processing procedure causing the computer to acquire information related to elements by tracing a tree structure of the structured document according to the document structure information, and to acquire a portion of the structured document based on the information that is acquired. According to the computer-readable storage medium of the present invention, it is possible to reduce a load on a processor that processes the structured document, and to reduce a storage capacity that is required to process the structured document.

Therefore, according to the present invention, by use of the document structure information, it becomes unnecessary to carry out a process of reconverting the developed structured document back to the original structured document when inputting and outputting the structured document that is to be processed, and the load on the CPU can be reduced. In addition, the structured document can be processed using a memory having a relatively small storage capacity. Moreover, since the structured document is used in the text form, it is unnecessary to increase the storage capacity of the memory that is used and the usage of the memory does not become limited, even when the elements that are the targets to be processed spans the entire tree structure. Furthermore, in a case where the element is to be specified according to the search condition and the subjection of the specified element is to be acquired in the structured document, it is possible to carry out a high-speed process because there is no need to regenerate by a reverse conversion the structured document that is to be output.

Other objects and further features of the present invention will be apparent from the following detailed description when read in conjunction with the accompanying drawings.

### BRIEF DESCRIPTION OF THE DRAWINGS

FIG. 1 is a functional block diagram showing an example of a conventional structured document processing apparatus;
FIG. 2 is a diagram showing an example of a structured document;
FIG. 3 is a diagram for explaining a developing of the structured document shown in FIG. 2;
FIG. 4 is a diagram for explaining information that is developed and stored in a memory;
FIG. 5 is a functional block diagram showing a first embodiment of a structured document processing apparatus according to the present invention;
FIG. 6 is a diagram showing a structured document;
FIG. 7 is a diagram showing document structure information;
FIG. 8 is a diagram for explaining an embodiment of an array of the structured document and the document structure information stored in first and second memories;
FIG. 9 is a flow chart for explaining an operation of the first embodiment;
FIG. 10 is a diagram for explaining a case where a link between elements having a strong correlation is added to the document structure information;
FIG. 11 is a diagram for explaining a case where a link between character strings of contents such as element and attribute is added to the document structure information;
FIG. 12 is a diagram for explaining a case where a portion of the structured document is modified;
FIG. 13 is a flow chart for explaining an operation for the case where the portion of the structured document is modified;
FIG. 14 is a diagram for explaining a case where a portion of a divided structured document is modified;
FIG. 15 is a functional block diagram showing a structured document holding part of a second embodiment of the structured document processing apparatus according to the present invention;
FIG. 16 is a flow chart for explaining an operation for a case where a portion of a divided structured document is modified;
FIG. 17 is a functional block diagram showing a third embodiment of the structured document processing apparatus according to the present invention;
FIG. 18 is a flow chart for explaining an accepting process of the third embodiment; and
FIG. 19 is a flow chart for explaining an operation of the third embodiment.

### BEST MODE OF CARRYING OUT THE INVENTION

A description will be given of embodiments of the structured document processing method, the structured document processing apparatus and the computer-readable storage medium according to the present invention, by referring to the drawings.

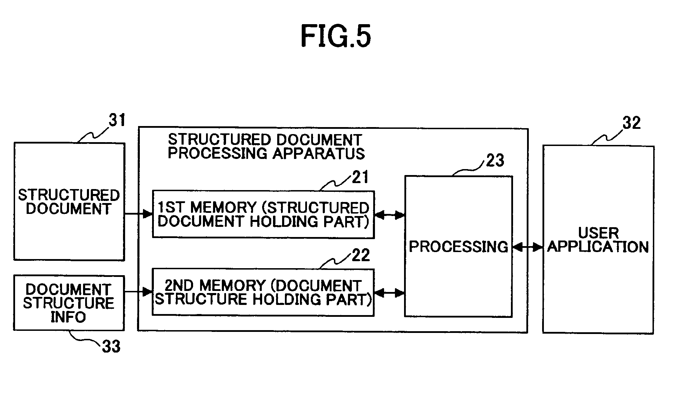

FIG. 5 is a functional block diagram showing a first embodiment of the structured document processing apparatus according to the present invention. The functions of the functional blocks shown in FIG. 5 are realized by a known basic structure including a memory and a processor such as a CPU. This first embodiment of the structured document processing apparatus employs a first embodiment of the structured document processing method according to the present invention and a first embodiment of the computer-readable storage medium according to the present invention.

In FIG. 5, the structured document processing apparatus (DOM processor) includes a first memory 21 that forms a structured document holding part, a second memory 22 that forms a document structure holding part, and a processing part 23. The functions of the processing part 23 are realized by the CPU, and the processing part 23 controls the process of the entire structured document processing part, including write and read with respect to the first and second memories 21 and 22. A portion of the functions of the processing part 23 and the first memory 21 may be provided within the structured document holding part. Similarly, a portion of the functions of the processing part 23 and the second memory 22 may be provided within the document structure holding part. In addition, the first and second memories 21 and 22 may be formed by a single memory part or memory means.

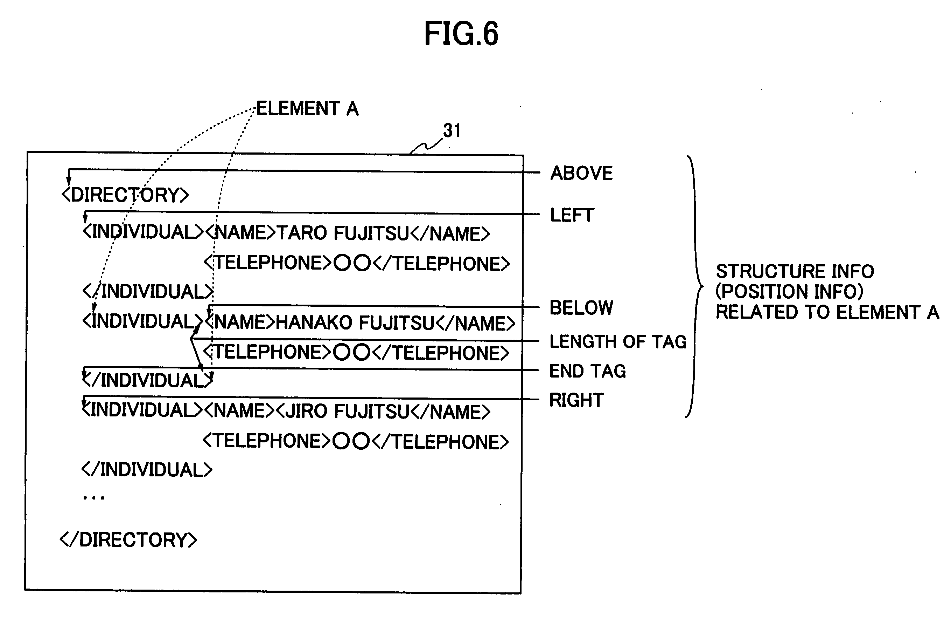

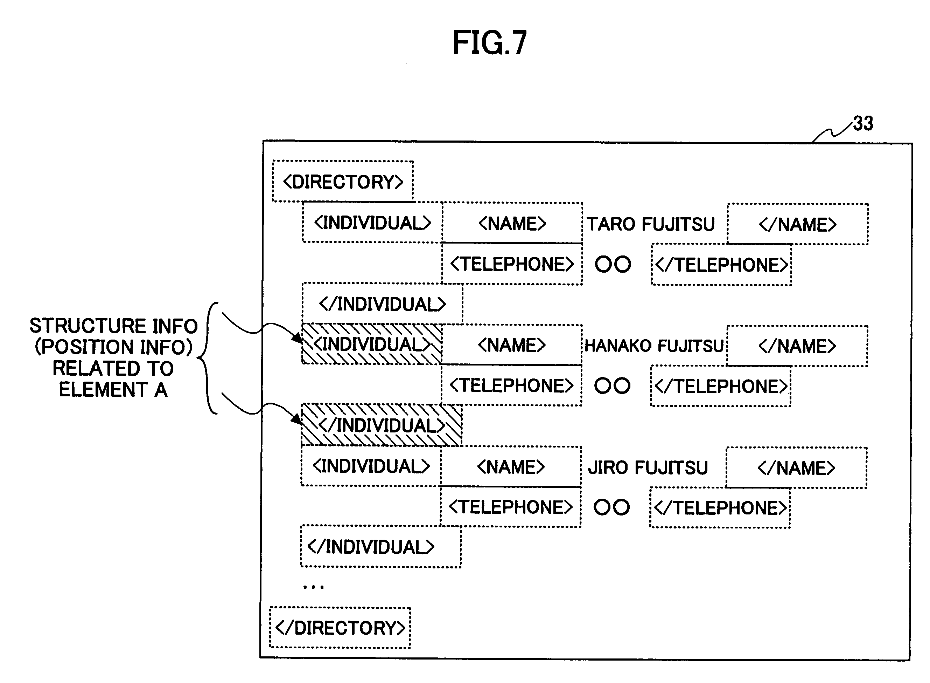

The structured document processing apparatus processes a structured document 31, such as the XML document shown in FIG. 6, in the text form that is not developed, and document structure information 33 shown in FIG. 7 which stores a parent-child relationship of each element (node) in a tree structure that represents the structured document 31 and a position of each tag in the structured document 31 in a related manner. In this embodiment, it is assumed for the sake of convenience that the structured document 31 is an XML document. FIG. 6 is a diagram showing the structured document 31, and FIG. 7 is a diagram showing the document structure information 33. In other words, the structured document 31 in the text form that is not developed, and the document structure information 33 which stores the structure information of each element in the tree structure that represents the structured document 31 and the position of each tag in the structured document 31 in the related manner are used for the structured document processing.

As shown in FIG. 7, an array having the same size as the structured document 31 shown in FIG. 6 is prepared in the document structure information 33 as an index array. The index array stores the positions of the elements above and below and to the right left of an element and the position of the end tag of the element, at the same position where special symbols "<>" and "/<>" for tags exist in the structured document 31 (position where the element name (tag name) exists). By using such position information, it becomes possible to make a high-speed access to the tree structure. It is possible to search the element name (tag name) at a high speed, by storing the position of the same element name (tag name) that immediately precedes at the same position where the element name (tag name) of the structured document 31 exists in the document structure information 33. It is also possible to search the element contents at a high-speed, by storing the immediately preceding appearing position of the same element contents at the position where the element contents exist in the document structure information 33.

In FIG. 7, the element name that is indicated within a portion surrounded by broken lines is not actually stored, but is provided to indicate the position of the tag of the corresponding element name (tag name) in the structured document 31.

The document structure information 33 may be generated in advance and input to the structured document processing apparatus together with the structured document 31 or, generated by the processing part 23 within the structured document processing apparatus based on the structured document 31 that is stored in the first memory 21.

By tracing the tree structure according to the document structure information 33, the contents such as the element name, the element and the attribute can be acquired from the structured document 31 based on the related tag positions. Since the structured document 31 is treated in the text form, it is unnecessary to develop the structured document 31 and unnecessary to generate the structured document 31 from the developed structured document 31 when inputting and outputting the structured document 31 to and from the structured document processing apparatus, and the load on the CPU is small. In addition, the amount of information of the document structure information 33 in this embodiment is approximately the same as that of the original structured document 31, and the required storage capacities of the first and second memories 21 and 22 can be relatively small.

In this embodiment, the document structure information 33 includes a serial array having the same amount of information (same size) as the structured document 31. FIGS. 6 and 7 show the contents of the document structure information 33 for a case where attention is drawn to an arbitrary element A of the structured document 31. A portion or all of the elements above and below and to the right and left of the element A shown in FIG. 6, the position of the end tag of this element A, and the lengths of the start tag and the end tag, are stored in regions indicated by the hatching in FIG. 7 at the same positions as the start tag and the end tag of the element A shown in FIG. 6. When carrying out a process by tracing the tree structure by using a specified element as a starting point, the position information of the elements above and below and to the right and left of the specified element is acquired from the document structure information 33, and the contents of the specified element, such as the element name, the element, the attribute and the like, the entire structured document 31 under subjection of the specified element and the like are acquired from the structured document 31, based on the start tag or the end tag of the specified element.

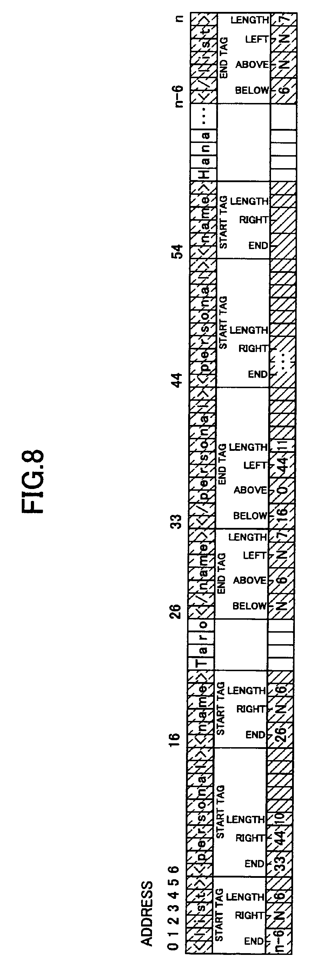

FIG. 8 is a diagram for explaining an embodiment of an array of the structured document 31 and the document structure information 33 stored in the first and second memories 21 and 22. It is assumed for the sake of convenience that the structured document 31 is an XML document. In FIG. 8, "list" corresponds to directory, "personal" corresponds to individual, and "name" corresponds to name. As shown in FIG. 8, the document structure information 33 stores the structure information of each element of the tree structure and the position of each tag in the structured document 31 in a related manner. In the embodiment shown in FIG. 8, the positions of the elements above and below and to the right and left, the position of the end tag, and the lengths of the start tag and the end tag are all stored in the document structure information 33. In addition, the positions of the elements above and below and to the right and left and the position of the end tag are respectively represented by 2 bytes, and the lengths of the start tag and the end tag are represented by 1 byte. In FIG. 8, N denotes Null.

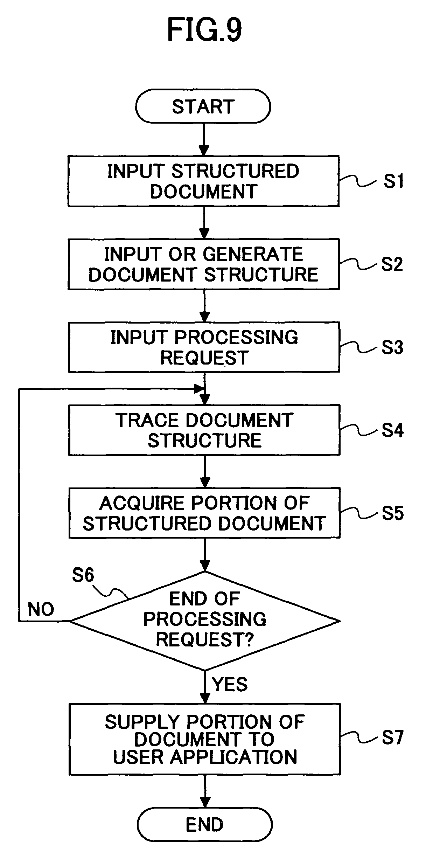

FIG. 9 is a flow chart for explaining an operation of the first embodiment. The process shown in FIG. 9 is carried out by the CPU that forms the processing part 23 shown in FIG. 5. In FIG. 9, a step S1 inputs the structured document 31 and writes the structured document 31 into the first memory 21. A step S2 inputs the document structure information 33 or, generates the document structure information 33 by the processing part 23 based on the structured document 31 that is read from the first memory 21, and writes the document structure information 33 into the second memory 22.

A step S4 reads the document structure information 33 stored in the second memory 22, and traces the tree structure representing the structured document 31 according to the document structure information, depending on the processing request of the user application 32 that is input. A step S5 acquires a portion of the structured document 31 from the position information that is obtained by tracing the tree structure (document structure information 33). A step S6 decides whether or not the processing request from the user application 32 has ended, and the process returns to the step S4 if the decision result in the step S6 is NO. On the other hand, if the decision result in the step S6 is YES, a step S7 supplies the acquired portion of the structured document 31 to the user application 32, and the process ends. Thereafter, the user application 32 can carry out an arbitrary process with respect to the acquired portion of the structured document 31.

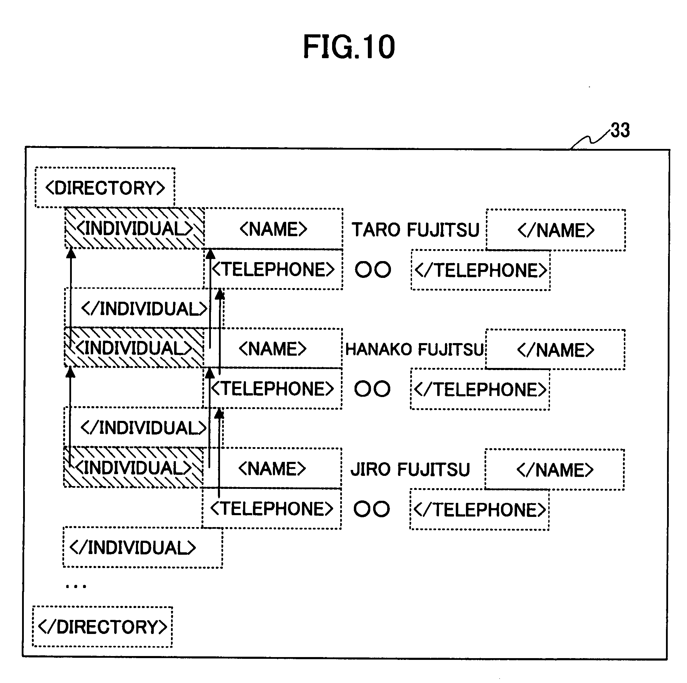

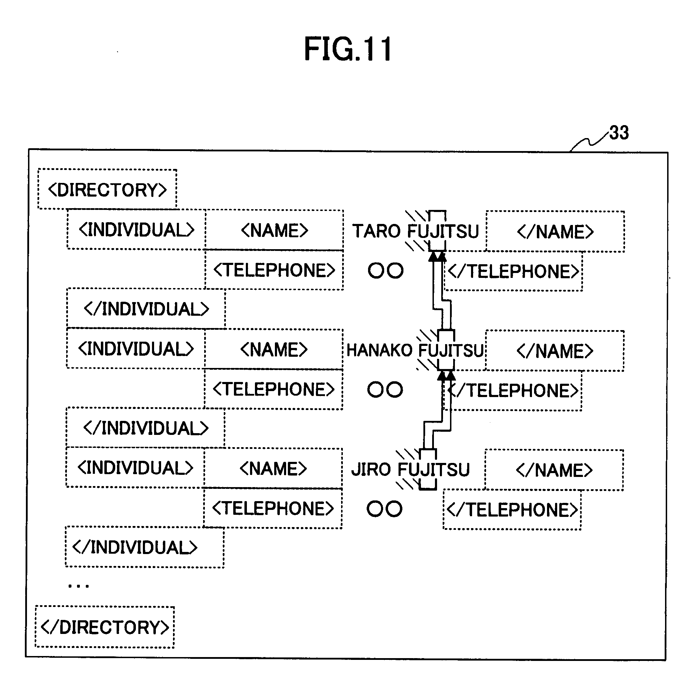

Next, a description will be given of cases where the information that is used to search the element is added to the document structure information 33, by referring to FIGS. 10 and 11.

FIG. 10 is a diagram for explaining the case where a link between the elements having a strong correlation is added to the document structure information 33. In FIG. 10, the link is formed between the elements having the same element name, as indicated by the arrows. Hence, when one element having a particular element name is detected by a hash or character string search, it is possible to detect the elements having the same name one after another.

FIG. 11 is a diagram for explaining the case where a link between character strings of the contents such as the element and the attribute is added to the document structure information 33. In FIG. 11, the link is formed between two same character strings (character strings each made up of 2 characters), as indicated by the arrows. Hence, when one particular character string is detected by a hash or character string search, it is possible to detect the positions having the same character string one after another.

Accordingly, by adding the link described above, it becomes possible to search the same element names and the same element contents within the structured document 31 at a high speed. For example, when executing the function (Get Elements By Tag Name) that is provided in the DOM processor and acquires a list of the same tag names, it becomes possible to search the tag names and the like that are to be acquired by adding the link described above.

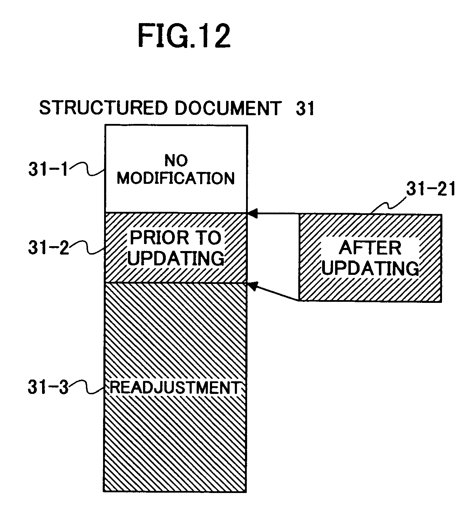

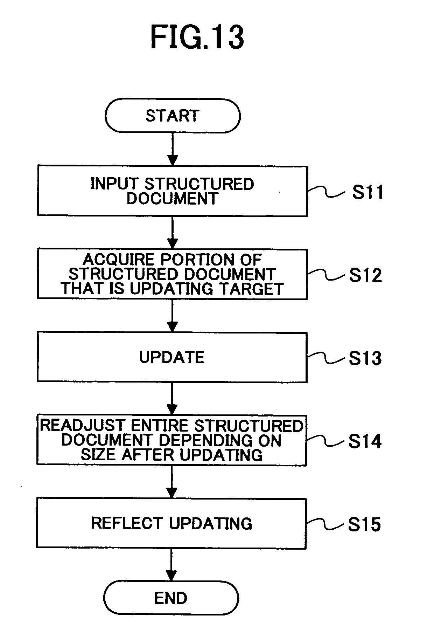

Next, a description will be given of an operation for a case where a portion of the structured document 31 is modified based on a processing request from the user application 32, by referring to FIGS. 12 and 13. FIG. 12 is a diagram for explaining the case where the portion of the structured document 31 is modified, and FIG. 13 is a flow chart for explaining an operation for the case where the portion of the structured document 31 is modified. The process shown in FIG. 13 is carried out by the CPU that forms the processing part 23 shown in FIG. 5.

FIG. 12 shows the structured document 31 made up of document portions 31-1, 31-2 and 31-3. When the document portion 31-2 prior to the updating is updated to a document portion 31-21 after the updating, the position of the document portion 31-3 that is to follow the document portion 31-21 is adjusted depending on the size of the document portion 31-21 and the entire structured document 31 is readjusted.

In FIG. 13, a step S11 reads the structured document 31 that is stored in the first memory 21, and inputs the structured document 31 to the processing part 23. A step S12 acquires the document portion 31-2 of the structured document 31, that is the target of the updating. A step S13 updates the document portion 31-2 to the document portion 31-21. A step S14 adjusts the position of the document portion 31-3 which follows the document portion 31-21, depending on the size of the document portion 31-21 after the updating, and readjusts the entire structured document 31. A step S15 writes the updated structured document 31, including the document portion 31-21, into the first memory 21 so as to reflect the updating, and the process ends.

In the structured document processing apparatus, the structured document 31 is treated in the text form without being developed. For this reason, even when the structured document 31 is divided uniformly without matching the dividing positions to the joints or nodes of the elements, it is possible to treat the divided document portions by simply joining the preceding and subsequent document portions of the structured document 31. By dividing the structured document 31 in the above described manner, it is possible to suppress a large amount of readjustment when a portion of the structured document 31 is updated.

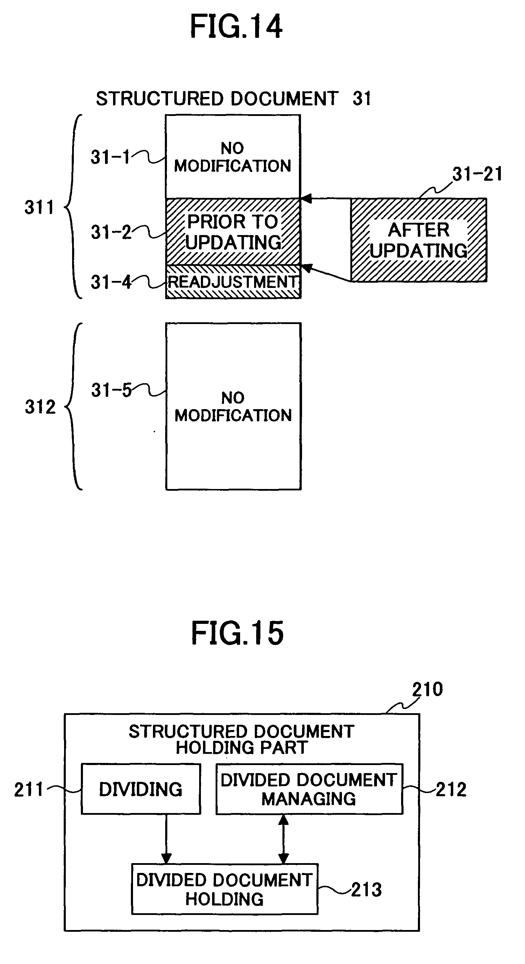

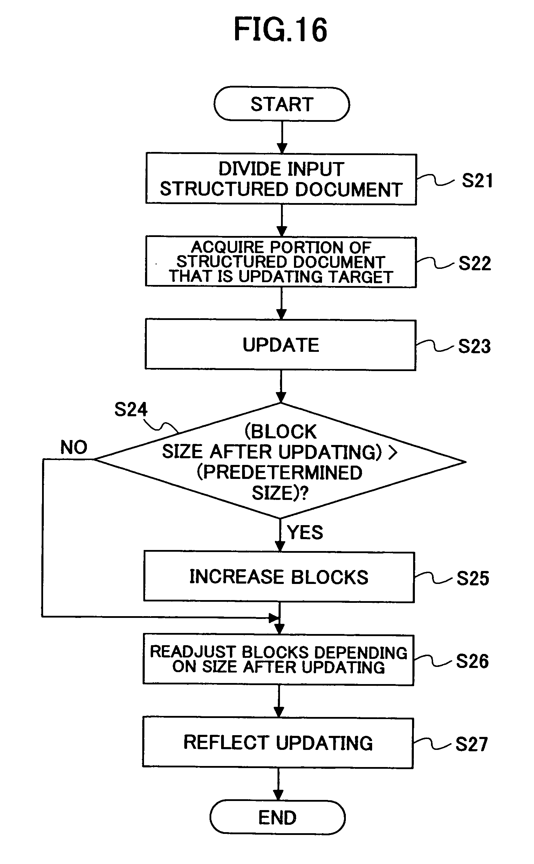

Next, a description will be given of a second embodiment of the structured document processing apparatus according to the present invention, by referring to FIGS. 14 through 16. In this second embodiment, it is assumed for the sake of convenience that a portion of the divided structured document 31 is modified based on a processing request from the user application 32. Functional blocks of this second embodiment of the structured document processing apparatus may be realized by the basic structure shown in FIG. 5. This second embodiment of the structured document processing apparatus employs a second embodiment of the structured document processing method according to the present invention and a second embodiment of the computer-readable storage medium according to the present invention. FIG. 14 is a diagram for explaining a case where a portion of the divided structured document 31 is modified, and FIG. 15 is a functional block diagram showing a structured document holding part 210 of this second embodiment of the structured document processing apparatus according to the present invention. FIG. 16 is a flow chart for explaining an operation for the case where the portion of the divided structured document 31 is modified. The process shown in FIG. 16 is carried out by the CPU that forms the processing part 23 shown in FIG. 5.

FIG. 14 shows a structured document 31 that is divided into divided portions (or blocks) 311 and 312. It is assumed for the sake of convenience that the divided portion 311 is modified, and that the divided portion 312 is not modified. The divided portion 311 includes document portions 31-1, 31-2 and 31-4. When the document portion 31-2 prior to the updating is updated to the document portion 31-21 after the updating, the position of the document portion 31-4 that is to follow the document portion 31-21 is adjusted depending on the size of the document portion 31-21, and only the divided portion 311 is readjusted. The divided portion 312 includes a document portion 31-5, and follows the divided portion 311 without being modified.

The structured document holding part 210 shown in FIG. 15 is provided in place of the first memory 21 shown in FIG. 5. The structured document holding part 210 includes a dividing part 211, a divided document managing part 212 and a divided document holding part 213. The dividing part 211 divides the structured document 31 that is input into predetermined sizes (or division widths). In this particular case, the structured document 31 is divided into the divided portions 311 and 312. The divided document holding part 213 is formed by a memory, and stores the divided portions (blocks) of the structured document 31, such as the divided portions 311 and 312, under the management of the divided document managing part 212. The divided document managing part 212 controls the write and read of the divided portions (blocks) of the structured document 31, such as the divided portions 311 and 312, to and from the divided document holding part 213, controls a redivision of the divided portions (blocks) caused by updating of the divided portions (blocks), and controls the readjustment of the updated divided portions (blocks).

The functions of the dividing part 211 and/or the divided document managing part 212 may be realized by the processing part 23. Furthermore, the structured document holding part 210 may be realized by the first memory 21 that functions as the divided document holding part 213, and the functions of the dividing part 211 and the divided document managing part 212 may be realized by the processing part 23. In this case, the functional blocks of the first embodiment shown in FIG. 5 may be used as it is for this second embodiment.

It is assumed for the sake of convenience that the process shown in FIG. 16 is carried out by the CPU that forms the processing part 23 shown in FIG. 5. In FIG. 16, a step S21 divides the structured document 31 that is input into the divided portions 311 and 312, and stores the divided portions 311 and 312 in the divided document holding part 213. A step S22 acquires the document portion 31-2 within the divided portion 311 of the structured document 31 which is the target of the updating. A step S23 updates the document portion 31-2 to the document portion 31-21. A step S24 decides whether or not the size of the divided portion (block) made up of the document portions 31-1 and 31-4 and the document portion 31-21 after the updating is greater than a predetermined size. If the decision result in the step S24 is NO, the process advances to a step S26 which will be described later.

If the decision result in the step S24 is YES, a step S25 redivides the divided portion (block) that is made up of the document portions 31-1 and 31-4 and the document portion 31-21 after the updating, so that the size of one divided portion (block) does not become later than the predetermined size. After the step S25 or, if the decision result in the step S24 is NO, a step S26 adjusts the position of the divided portion (block) 312 that is to follow the divided portion (block) described above depending on the size of one or a plurality of divided portions (blocks) after the updating, and readjusts the entire structured document 31. A step S27 writes the updated structured document 31, including the document portion 31-21, into the first memory 21 so as to reflect the updating, and the process ends.

Accordingly, it is possible to absorb the change in the size of the divided portions (blocks) caused by the updating of the divided portions, at the boundary of the divided portions.

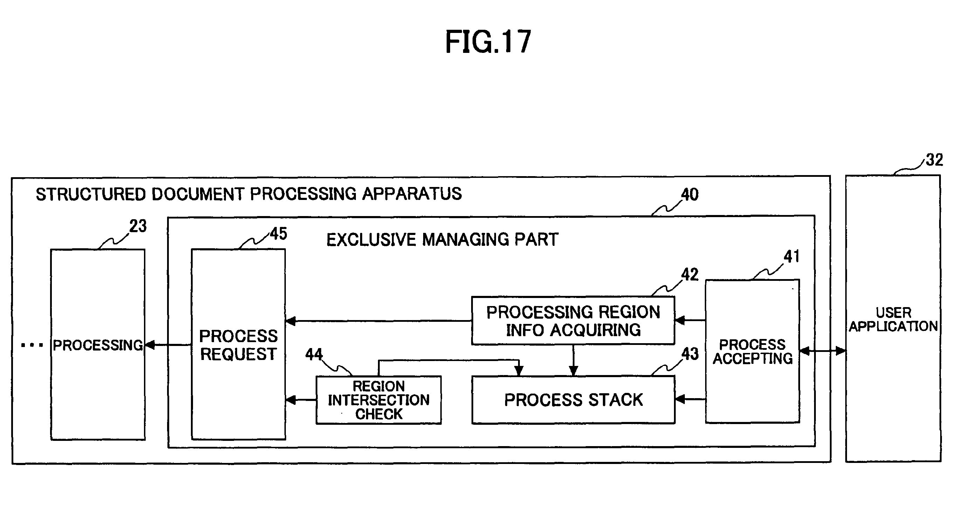

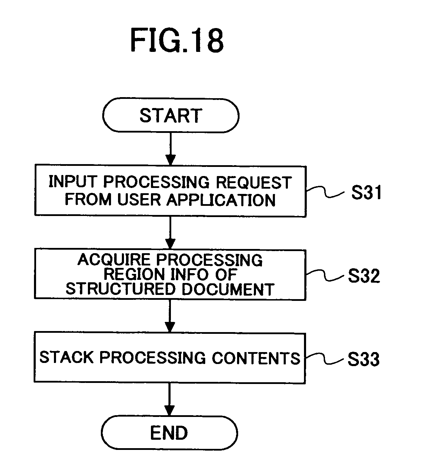

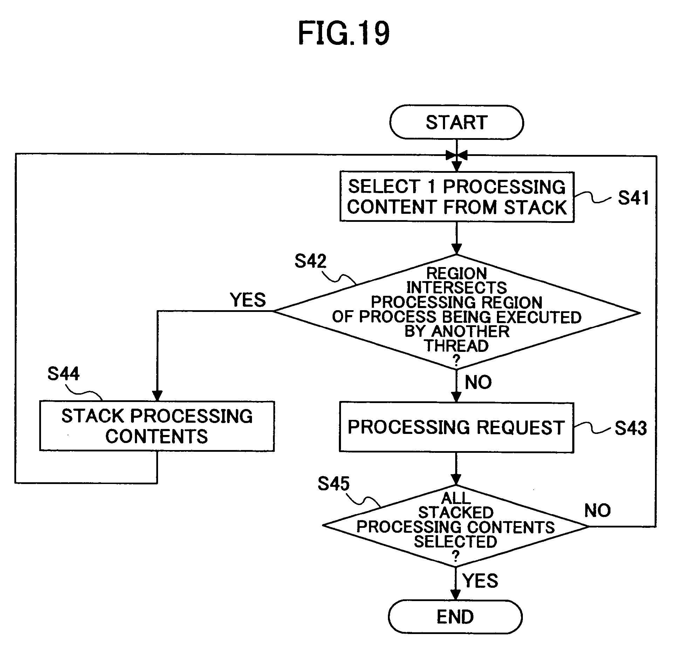

Next, a description will be given of a third embodiment of the structured document processing apparatus according to the present invention, by referring to FIGS. 17 through 19. This third embodiment of the structured document processing apparatus employs a third embodiment of the structured document processing method according to the present invention and a third embodiment of the computer-readable storage medium according to the present invention. FIG. 17 is a functional block diagram showing this third embodiment of the structured document processing apparatus according to the present invention. In FIG. 17, those parts which are the same as those corresponding parts in FIG. 5 are designated by the same reference numerals, and a description thereof will be omitted. In addition, the illustration of the first and second memories 21 and 22 is omitted in FIG. 17. FIG. 18 is a flow chart for explaining an accepting process of this third embodiment, and FIG. 19 is a flow chart for explaining an operation of this third embodiment.

The advantages of treating the structured document 31 in the text form also exist for an exclusive process. In other words, when the exclusive process is carried out with respect to an element group that is under subjection of a specific element, the start tag and the end tag of the corresponding element may be obtained, and a judgement may be made to determine whether or not a parallel processing is possible by simply judging whether or not an intersection of the widths of the start and end tags exists.

In FIG. 17, the structured document processing apparatus includes, in addition to the structure shown in FIG. 5, an exclusive managing part 40 which simultaneously accepts a plurality of processing requests and successively makes a processing request to the processing part 23. The exclusive managing part 40 includes a process accepting part 41, a processing region information acquiring part 42, a process stack part 43, a region intersection check part 44 and a process request part 45. In this embodiment, a portion or all of the functions of the exclusive managing part 40 is realized by the CPU that realizes the functions of the processing part 23. However, it is of course possible to realize the functions of the exclusive managing part 40 by an exclusive processor.

The process accepting part 41 inputs a processing request from the user application 32. The processing region information acquiring part 42 acquires processing region information that indicates which region (for example, which byte) of the structured document 31 is to be processed, from the processing request that is input. The process stack part 43 acquires processing contents that indicate which tag is to be rewritten, how the tag is to be rewritten and the like, from the processing request that is input, and stacks the processing contents. The region intersection check part 44 judges whether or not a processing region that is being processed by another thread, for example, intersects the processing region that is indicated by the processing region information acquired from the processing request that is input. In other words, the region intersection check part 44 checks whether or not the processing region which is a processing target of the processes stacked in the process stack part 43 or the process that is being processed in the processing part 23 intersects the processing region which is a processing target of the process requested by the processing request that is input to the process accepting part 41. If the region intersection check part 44 judges that there is no intersection of the processing regions, the process request part 45 makes a request to the processing part 23 to request processing of the processing contents with respect to the processing region indicated by the processing region information. On the other hand, if the region intersection check part 44 judges that the intersection of the processing regions exists, the processing contents are stacked in the process stack part 43.

The accepting process shown in FIG. 18 is carried out by the CPU that forms the processing region information acquiring part 42 and the process stack part 43 shown in FIG. 17. A step S31 inputs the processing request from the user application 32. A step S32 acquires the process region information that indicates which region (for example, which byte) of the structured document 31 is to be processed, from the processing request that is input. A step S33 acquires the processing contents that indicate which tag is to be rewritten, how the tag is to be rewritten and the like, from the processing request that is input, and stacks the processing contents. The process ends after the step S33.

The process shown in FIG. 19 is carried out by the CPU that forms the region intersection check part 44 and the process request part 45 shown in FIG. 17. A step S41 selects one of the stacked processing contents. A step S42 decides whether or not the processing region that is being processed by another thread, for example, intersects the processing region that is indicated by the processing region information acquired from the processing request that is input, based on the one processing content that is selected. If the decision result in the step S42 is NO, a step S43 makes the request to the processing part 23 to request the processing of the processing contents with respect to the processing region indicated by the processing region information, and the process advances to a step S45. On the other hand, if the decision result in the step S42 is YES, a step S44 stacks the processing contents, and the process returns to the step S41. The step S45 decides whether or not all of the stacked processing contents have been selected, and the process returns to the step S41 if the decision result in the step S45 is NO. The process ends if the decision result in the step S45 is YES.

Each of the embodiments of the computer-readable storage medium according to the present invention may be realized by a recording medium storing a computer program that causes a computer to carry out the structured document processing described above so that the computer operates as the structured document processing apparatus. The recording medium forming the computer-readable storage medium is not limited to a particular type, and any suitable recording media capable storing the computer program in a computer-readable manner may be used. Recording media usable for the computer-readable storage medium include magnetic recording media, optical recording media, magneto-optical recording media, semiconductor memory devices and the like. In addition, the computer program may be downloaded into a storage unit of the computer from another computer via a network or the like.

The present invention is applicable to various kinds of electronic apparatuses and general purpose computers formed by a memory and a processor such as a CPU, and the present invention is applicable to apparatuses other than the portable type apparatuses.

Further, the present invention is not limited to these embodiments, but various variations and modifications may be made without departing from the scope of the present invention.

## Claims

1. A structured document processing method comprising:
a structured document holding step holding a structured document that includes tags, in a text form, in a memory means;
a document information holding step holding document structure information of the structured document and positions of each of the tags of the structured document in a related manner, in the memory means; and
a processing step acquiring information related to elements by tracing a tree structure of the structured document according to the document structure information, and acquiring a portion of the structured document based on the information that is acquired.

2. The structured document processing method as claimed in claim 1, wherein the document structure holding step stores in the memory means an array for document structure information having a size identical to that of an array for the structured document, and stores the document structure information in a region corresponding to a region of each of the tags of the structured document in the array for the document structure information.

3. The structured document processing method as claimed in claim 2, wherein the document structure information includes position information of elements above and below and to right and left of each element in the tree structure.

4. The structured document processing method as claimed in claim 2 or 3, wherein the document structure information includes position information of an end tag and/or a start tag.

5. The structured document processing method as claimed in any of claims 2 to 4, wherein the document structure information includes lengths of each of the tags.

6. The structured document processing method as claimed in any of claims 2 to 5, wherein the document structure information includes a link between elements having a strong relation, added to a region corresponding to a region of each of the tags of the structured document.

7. The structured document processing method as claimed in claim 2, wherein the document structure holding step stores position information of a character string identical to a character string forming a portion or all of contents of an element of interest, in a region corresponding to each element of the structured document, in the array for the document structure information.

8. The structured document processing method as claimed in claim 1, wherein the structured document holding step divides the structured document into a plurality of divided portions having a predetermined size, and holds the structured document by the divided portions, so that a change in a size of an arbitrary divided portion caused by an updating of the arbitrary divided portion is absorbed at a boundary of the divided portions.

9. The structured document processing method as claimed in claim 1, further comprising:
an exclusive managing step simultaneously accepting a plurality of processing requests and successively making a processing request,
wherein the exclusive managing step carries out an accepted process and another process in parallel if a region that is a processing target of the accepted process does not intersect a region that is a processing target of the other process.

10. A structured document processing apparatus comprising:
a structured document holding part configured to hold a structured document that includes tags, in a text form;
a document information holding part configured to hold document structure information of the structured document and positions of each of the tags of the structured document in a related manner; and
a processing part configured to acquire information related to elements by tracing a tree structure of the structured document according to the document structure information, and to acquire a portion of the structured document based on the information that is acquired.

11. The structured document processing apparatus as claimed in claim 10, wherein the document structure holding part stores an array for document structure information having a size identical to that of an array for the structured document, and stores the document structure information in a region corresponding to a region of each of the tags of the structured document in the array for the document structure information.

12. The structured document processing apparatus as claimed in claim 11, wherein the document structure information includes position information of elements above and below and to right and left of each element in the tree structure.

13. The structured document processing apparatus as claimed in claim 11 or 12, wherein the document structure information includes position information of an end tag and/or a start tag.

14. The structured document processing apparatus as claimed in any of claims 11 to 13, wherein the document structure information includes lengths of each of the tags.

15. The structured document processing apparatus as claimed in any of claims 11 to 14, wherein the document structure information includes a link between elements having a strong relation, added to a region corresponding to a region of each of the tags of the structured document.

16. The structured document processing apparatus as claimed in claim 11, wherein the document structure holding part stores position information of a character string identical to a character string forming a portion or all of contents of an element of interest, in a region corresponding to each element of the structured document, in the array for the document structure information.

17. The structured document processing apparatus as claimed in claim 10, wherein the structured document holding part comprises a dividing part configured to divide the structured document into a plurality of divided portions having a predetermined size, a divided document holding part configured to hold the structured document by the divided portions, and a divided document managing part configured to absorb a change in a size of an arbitrary divided portion caused by an updating of the arbitrary divided portion at a boundary of the divided portions by controlling write and read of the divided portions with respect to the divided document holding part, controlling redivision of the arbitrary divided portion caused by the updating of the arbitrary divided portion and controlling adjustment of the updated divided portions.

18. The structured document processing apparatus as claimed in claim 10, further comprising:
an exclusive managing part configured to simultaneously accept a plurality of processing requests and to successively make a processing request,
wherein the exclusive managing part carries out an accepted process and another process in parallel if a region that is a processing target of the accepted process does not intersect a region that is a processing target of the other process.

19. A computer-readable storage medium which stores a computer program for causing a computer to carry out a structured document processing, said program comprising:
a structured document holding procedure causing the computer to hold a structured document that includes tags, in a text form;
a document information holding procedure causing the computer to hold document structure information of the structured document and positions of each of the tags of the structured document in a related manner; and
a processing procedure causing the computer to acquire information related to elements by tracing a tree structure of the structured document according to the document structure information, and to acquire a portion of the structured document based on the information that is acquired.

20. The computer-readable storage medium as claimed in claim 19, wherein the document structure holding procedure causes the computer to store an array for document structure information having a size identical to that of an array for the structured document, and to store the document structure information in a region corresponding to a region of each of the tags of the structured document in the array for the document structure information.

21. The computer-readable storage medium as claimed in claim 20, wherein the document structure information includes position information of elements above and below and to right and left of each element in the tree structure.

22. The computer-readable storage medium as claimed in claim 20 or 21, wherein the document structure information includes position information of an end tag and/or a start tag.

23. The computer-readable storage medium as claimed in any of claims 20 to 22, wherein the document structure information includes lengths of each of the tags.

24. The computer-readable storage medium as claimed in any of claims 20 to 23, wherein the document structure information includes a link between elements having a strong relation, added to a region corresponding to a region of each of the tags of the structured document.

25. The computer-readable storage medium as claimed in claim 20, wherein the document structure holding procedure causes the computer to store position information of a character string identical to a character string forming a portion or all of contents of an element of interest, in a region corresponding to each element of the structured document, in the array for the document structure information.

26. The computer-readable storage medium as claimed in claim 19, wherein the structured document holding procedure causes the computer to divide the structured document into a plurality of divided portions having a predetermined size, and to hold the structured document by the divided portions, so that a change in a size of an arbitrary divided portion caused by an updating of the arbitrary divided portion is absorbed at a boundary of the divided portions.

27. The computer-readable storage medium as claimed in claim 19, wherein said program further comprises:
an exclusive managing procedure causing the computer to simultaneously accept a plurality of processing requests and to successively make a processing request,
wherein the exclusive managing procedure causes the computer to carry out an accepted process and another process in parallel if a region that is a processing target of the accepted process does not intersect a region that is a processing target of the other process.
